Europäisches Patentamt

European Patent Office

Office européen des brevets

(19)

(11) Publication number: **0 253 952 B1**

## (12) EUROPEAN PATENT SPECIFICATION

(45) Date of publication of patent specification: **30.10.91**

(21) Application number: **87104235.4**

(22) Date of filing: **17.08.83**

(51) Int. Cl.⁵: **F16H  61/02**

(60) Publication number of the earlier application in accordance with Art.76 EPC: **0 103 751**

(54) Hydraulic control system for a transmission.

(30) Priority: **20.08.82 JP 143288/82**

(43) Date of publication of application:
**27.01.88 Bulletin  88/04**

(45) Publication of the grant of the patent:
**30.10.91 Bulletin  91/44**

(84) Designated Contracting States:
**DE GB**

(56) References cited:
**FR-A- 2 248 443**
**FR-A- 2 438 210**
**GB-A- 2 014 257**

(73) Proprietor: **NISSAN MOTOR CO., LTD.**
**No.2, Takara-cho, Kanagawa-ku**
**Yokohama City(JP)**

(72) Inventor: **Ohtsuka, Kunio**
**No. 3-64-4, Kokubun**
**Ebina City(JP)**
Inventor: **Ideta, Yasufumi**
**No. 1408-22, Kozono**
**Ayase-City§Kanagawa Prefecture(JP)**

(74) Representative: **Patentanwälte Grünecker,**
**Kinkeldey, Stockmair & Partner**
**Maximilianstrasse 58**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a hydraulic control system for a transmission according to the preamble part of claim 1. Such a hydraulic control system is disclosed in GB-A-2 014 257, said known hydraulic control system for a transmission including a torque converter comprising a pump for supplying fluid pressure, a pressure regulator valve for regulating the output of said pump by draining off some of the fluid discharged by said pump and developing a line pressure in a line pressure conduit and a pressure limiting valve being operatively disposed between said pressure regulator valve and said torque converter. Said pump of the known control system is a variable capacity pump having a control arrangement including a control chamber fluidly communicating with a port of said pressure regulator valve. The pressure limiting valve has an inlet port fluidly communicating with the same port of the pressure regulator valve. Said pressure regulator valve, in turn, has a spool formed with a land covering said port so that said port is out of fluid communication with said line pressure conduit, said land uncovering said port to let said port communicate with said line pressure conduit so as to drain off some of the fluid discharged by said variable capacity pump out of said port toward said inlet port of said pressure limiting valve.

A further control system is known from FR-A-2 248 443. The embodiment according to figure 2 of this known control system includes a pump and a main pressure regulator valve which is connected to a torque converter via a pressure converter valve. The main pressure regulator valve has a port which always communicates with a gear position selector valve and the pressure converter valve. The communication between the gear selector valve and the pressure converter valve is unrestricted and therefore, the same hydraulic fluid pressure as supplied to the gear selector valve is supplied to the pressure converter valve. Since this hydraulic fluid pressure is the line pressure, the line pressure is supplied to the inlet of the converter valve.

Since the generic hydraulic control system according to GB-A-2 014 257 does not appear to provide the possibility that the main regulator average pressure is a regulated pressure and presents fluctuations due for example due to the viscosity or the line pressure and since the control system known from FR-A-2 248 443 suffers from the drawback that the pressure regulation of the oil discharged from the pump is relatively poor since the gear selector valve and the pressure converter valve are directly and unrestrictly connected to each other it is an object underlying the present invention to provide a hydraulic control system for a transmission according to the preamble part of claim 1 which is able to obviate the drawbacks of the known control systems. The solution of this object is achieved by the features of claim 1.

The arrangement of the hydraulic control system according to the present invention provides a pressure regulator valve which has a port which always communicates with a gear selector valve via a conduit. The beforementioned port is, however, not directly communicated with the pressure converter valve. For this purpose, the pressure regulator valve is formed with a second port which always communicates with the converter valve. This port is closed by a land of the spool of the pressure regulator valve when the oil pump cannot discharge oil at a sufficiently high rate such as during start-up of the engine. During operation of the regulator valve, an excessive amount of oil to be drained during pressure regulation is discharged out of the second port of the regulator valve into the conduit connected to the converter pressure valve. Moreover, with the hydraulic control system according to the present invention a first port is inserted between a line pressure port and an exhaust port.

Dependent claim 2 contains an advantaegous embodiment of the present invention.

## Brief Description Of The Drawings

Fig. 1 is a schematic view of a power transmission mechanism of a four speed automatic transmission as illustrated in connection with an engine which has a throttle mounted in an intake passage and an accelerator pedal; and

Figs. 2(a), 2(b), 2(c) and 3, when combined, illustrate a circuit diagram of a preferred embodiment of a hydraulic control system for the automatic transmission according to the present invention.

## DETAILED DESCRIPTION OF THE INVENTION

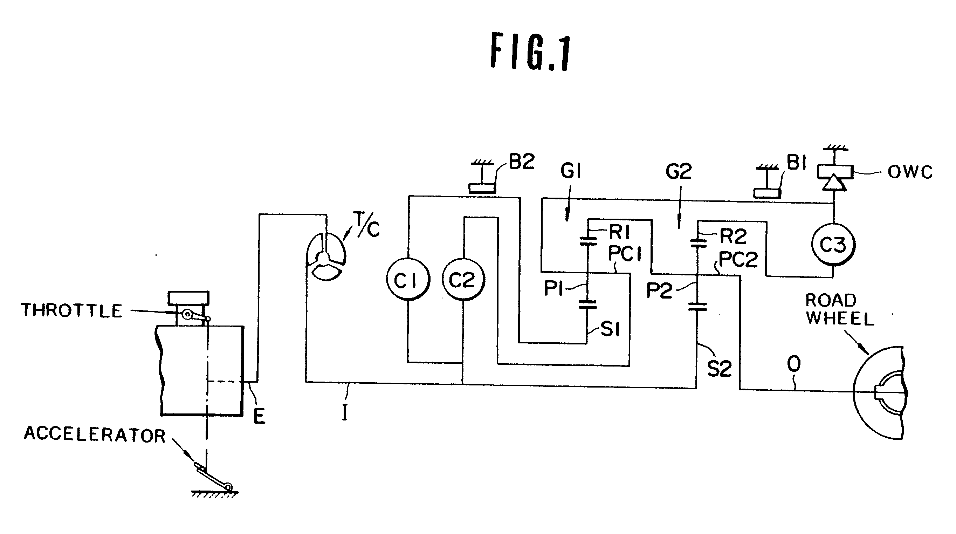

Referring to Fig. 1, there is illustrated a power transmission mechanism of a four forward speed and one reverse speed automatic transmission having an overdrive. This power transmission mechanism comprises an input shaft I operatively connected via a torque converter T/C to an engine output shaft E of an engine which has a throttle which opens in degrees, an output shaft O operatively connected to road wheels, only one being shown, via a final drive, not shown. A first planetary gear set G1 and a second planetary gear set

2

G2 are connected between the input and output shafts I and O. A plurality of fluid operated friction units are provided which are made operative and inoperative for producing a plurality of speed ratios between the input shaft I and output shaft O. The fluid operated frictional units include a first clutch C1, a second clutch C2, a third clutch C3, a first brake B1, a second brake B2, and a one-way clutch OWC. The first planetary gear set G1 comprises a sun gear S1, an internal gear R1, a carrier PC1 carrying pinion gears P1 meshing simultaneously both the gears S1 and R1. The planetary gear set G2 comprises a sun gear S2, an internal gear R2 and a carrier PC2 carrying pinion gears P2 meshing simultaneouly both gears S2 and R2. The carrier PC1 is connectable via the clutch C1 with the input shaft I, and the sun gear S1 is connectable via the clutch C2 with the input shaft I. The carrier PC1 is connectable via the clutch C3 with the internal gear R2. The sun gear S2 is constantly connected with the input shaft I. The internal gear R1 and carrier PC2 are constantly connected with the output shaft O. The brake B1 is arranged to anchor the carrier PC1. The brake B2 is arranged to anchor the sun gear S1. The one-way clutch OWC is so constructed that it allows forward rotation (i.e., the same rotation as that of the engine output shaft E), but prevents reverse rotation (i.e., the rotation opposite to the forward rotation). Thus, it acts as a brake only during reverse rotation.

In the above mentioned power transmission mechanism, the rotational state of each of the rotary elements (S1, S2, R1, R2, PC1, and PC2) of the planetary gear sets G1 and G2 can be varied by actuating a selected one or a combination of the clutches C1, C2 and C3, brake B1, (one-way clutch OWC) and brake B2, thus varying the revolution speed of the output shaft O relative to that of the input shaft I. The four forward speed ratios and one reverse speed ratio are produced if the clutches C1, C2 and C3 and brakes B1 and B2 are engaged in the manner as shown in the following table.

## Table

| | C1 | C2 | C3 | B1 (DWC) | B2 | Gear Ratio | $\alpha1 = 0.45$ $\alpha2 = 0.45$ |
|---|---|---|---|---|---|---|---|
| 1st speed | | | o | o | | $\dfrac{1 + \alpha2}{\alpha2}$ | 3.22 |
| 2nd speed | | | o | | o | $\dfrac{\alpha1 + \alpha2}{\alpha2(1+ \alpha1)}$ | 1.38 |
| 3rd speed | | o | o | | | 1 | 1 |
| 4th speed | | o | | | o | $\dfrac{1}{1 + \alpha1}$ | 0.69 |
| Reverse | o | | | o | | $-\dfrac{1}{\alpha1}$ | -2.22 |

In the above Table, a sign "o" denotes an actuation state of the clutch or brake, $\alpha1$ and $\alpha2$ respectively denote ratios of the number of teeth of the internal gears R1 and R2 to the number of teeth of the corresponding sun gears S1 and S2. A gear ratio is a ratio of the revolution number of the input shaft I to that of the output shaft O. What is denoted by the label (OWC) below the brake B1 means that the first speed ratio is produced owing to the action of the one-way clutch OWC even if the brake B1 is not applied. However, in this first speed ratio, it is not possible for the output shaft O to drive the engine (that is, no engine braking is effected).

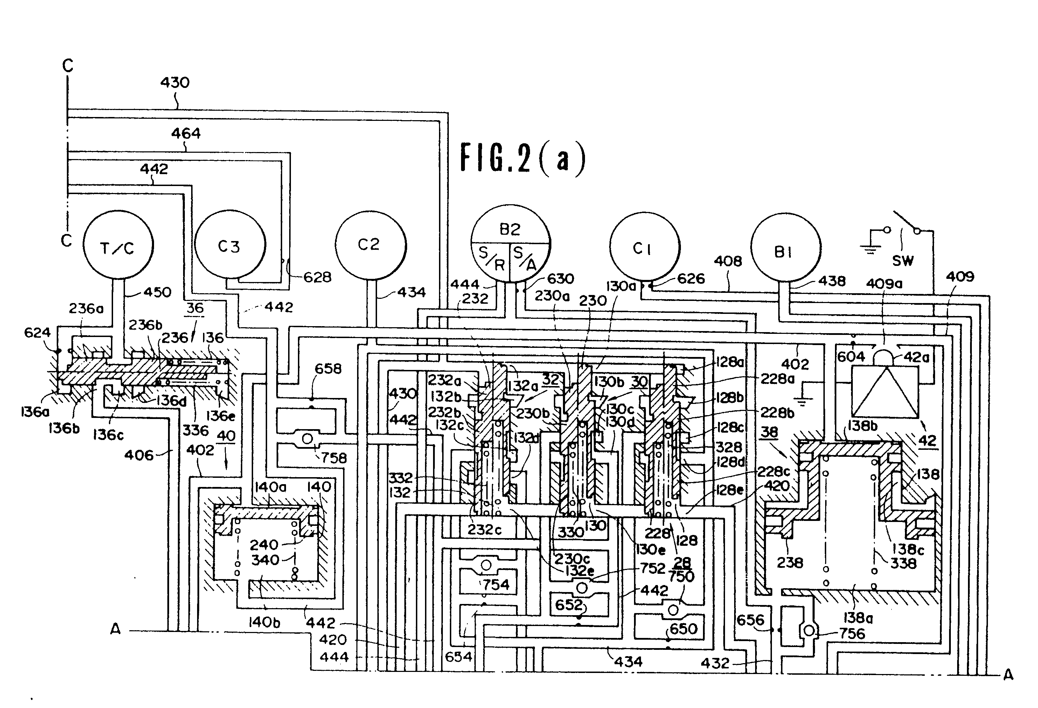

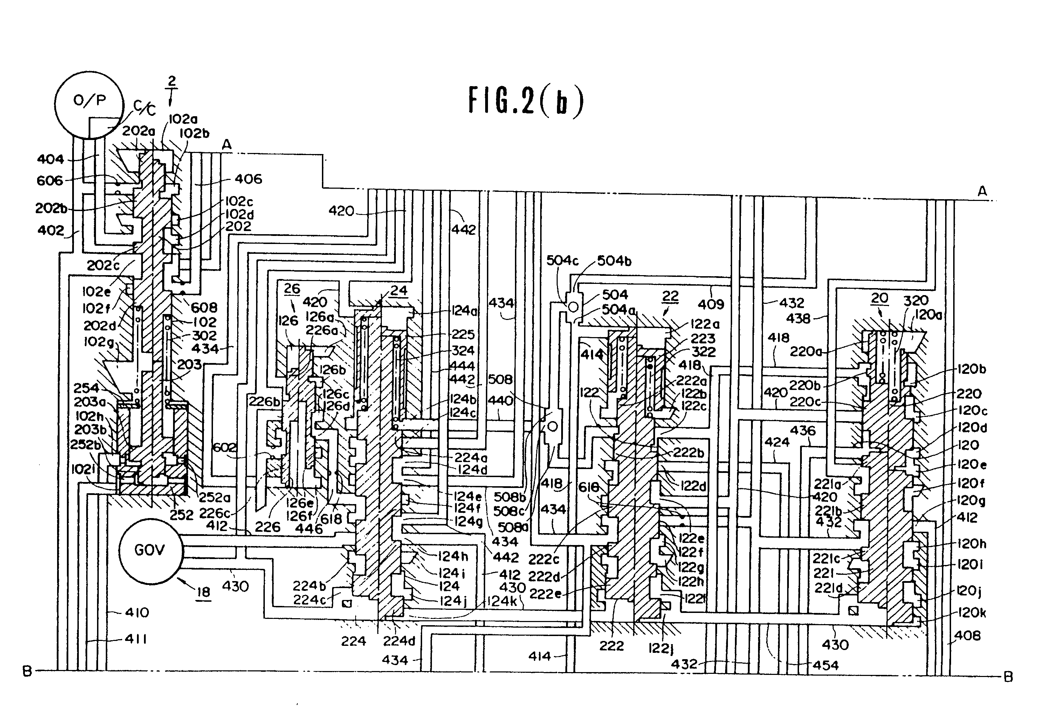

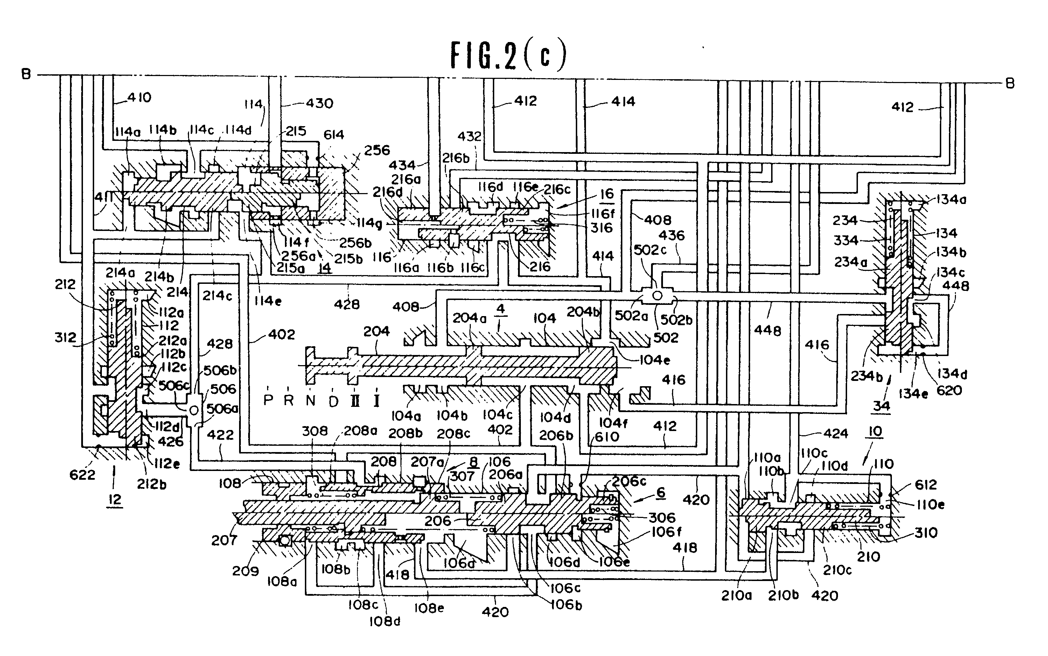

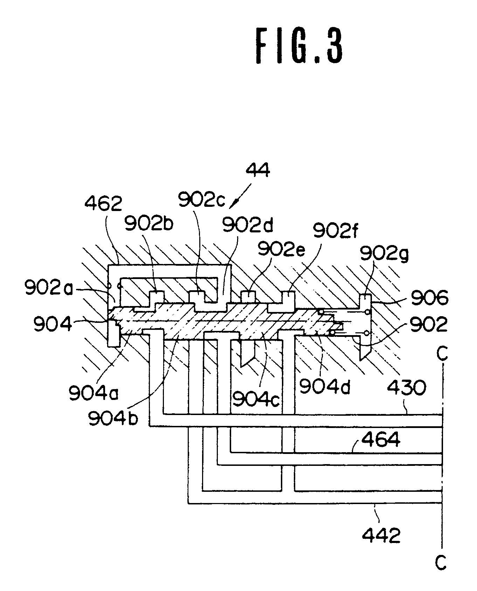

Referring to Figs. 2(a), 2(b), 2(c), and 3, a hydraulic control system for the above power transmission mechanism is described.

This hydraulic control system comprises a regulator valve 2, a manual valve 4, a throttle valve 6, a throttle fail safe valve 8, a throttle modulator valve 10, a pressure modifier valve 12, a cut back valve 14, a

3

line pressure booster valve 16, a governor valve 18, a 1-2 shift valve 20, a 2-3 shift valve 22, a 3-4 shift valve 24, a 2-4 timing valve 26, a 2-3 timing valve 28, a 3-4 timing valve 30, a 3-2 timing valve 32, a first manual range pressure reducing valve 34, a torque converter pressure reducing valve 36, a 1-2 accumulator 38, a 4-3 accumulator 40, an overdrive inhibitor solenoid 42, and a centrifugal force offset valve 44 (see Fig. 3). These valves are interconnected as shown in Figs. 2(a), 2(b), 2(c), and 3, and connected with an oil pump O/P, the torque converter T/C, clutches C1, C2 and brakes B1 and B2 as shown. The brake B2 has a servo apply chamber S/A, i.e., a fluid pressure chamber designed to apply the brake when pressurized, and a servo release chamber S/R, i.e., a fluid pressure chamber designed to release the brake when pressurized. Since the servo release chamber S/R has a larger pressure acting area than a pressure acting area of the servo apply chamber S/A, the brake B2 is released when the pressure is supplied to the servo release chamber S/R irrespective of the supply of fluid pressure to the servo apply chamber S/A. The overdrive inhibitor solenoid 42 is electrically connected with an overdrive inhibitor switch SW.

The names of parts denoted by the reference numerals in Figs. 2(a), 2(b) and 2(c) are hereinafter listed. The reference numerals 102, 104, 106, 108, 110, 112, 114, 116, 120, 122, 124, 126, 128, 130, 132, 1334 and 136 denote valve bores, the reference numerals 102a~j, 104a~f, 106a~f, 108a~e, 110a~e, 112a~e, 114a~g, 116a~f, 120a~k, 122a~j, 124a~k, 126a~e, 130a~e, 132a~e, and 136a~e ports, the reference numerals 138 and 140 cylinder bores, the reference numerals 202, 203, 204, 206, 210, 212, 214, 215, 216, 220, 221, 222, 224, 226, 228, 230, 232, 234, and 236 spools, the reference numerals 202a~d, 203a~b, 204a~b, 206a~c, 208a, 210a~c, 212a~b, 214a~c, 215a~b, 216a~c, 220a~c, 221a~d, 222a~e, 224a~d, 226a~c, 228a~c, 230a~c, 232a~c, 234a~b, and 236a~b lands, the reference numeral 207 plunger, the reference numeral 208 sleeve, the reference numeral 209 plug, the reference numerals 223 and 225 plugs, the reference numeral 238 and 240 pistons, the reference numeral 252 sleeve, the reference numeral 252a~c ports, the reference numeral 254 spring seat, the reference numerals 302, 306, 307, 308, 310, 312, 316, 320, 322, 324, 328, 330, 332, 334, 336, 338, and 340 springs, the reference numerals 402, 404, 406, 408, 409, 410, 411, 412, 414, 416, 418, 420, 422, 424, 426, 428, 430, 432, 434, 436, 438, 440, 442, 444, 446, 448 and 450 oil conduits, the reference numerals 502, 504, 506 and 508 shuttle valves, the reference numerals 602, 604, 606, 608, 610, 612, 614, 616, 618, 620, 622, 624, 626, 628, 630, 650, 652, 654, 656 and 658 orificies, and the reference numerals 750, 752, 754, 756 and 758 check valves.

## Claims

1. A hydraulic control system for a transmission including a torque converter (T/C), comprising;

a pump (O/P) for supplying fluid pressure;

a pressure regulator valve (2) for regulating the output of said pump by draining off some of the fluid discharged by said pump and developing a line pressure in a line pressure conduit (402), said pressure regulator valve (2) having a first port (102d) and a second port (102f); and

a pressure limiting valve (36) being operatively disposed between said pressure regulator valve (2) and said torque converter (T/C);

wherein said pump is a variable capacity pump (O/P) having a control arrangement including a control chamber (C/C);

wherein said pressure limiting valve (36) has an inlet port (136b); and

wherein said pressure regulator valve (2) has a spool (202) formed with a land (202d) covering said second port (102f) so that said second port (102f) is out of fluid communication with said line pressure conduit (402), said land (202d) uncovering said second port (102f) to let said second port (102f) communicate with said line pressure conduit (402) so as to drain off some of the fluid discharged by said variable capacity pump (O/P) out of said second port (102f) toward said inlet port (136b) of said pressure limiting valve (36), being
**CHARACTERIZED IN**

that said pressure limiting valve (36) has a feedback chamber (136a);

that said control chamber (C/C) fluidly communicates with said first port (102d) of said pressure

4

regulator valve (2);

that said inlet port (136b) fluidly communicates with the second port (102f) of said pressure regulator valve (2);

that said first port (102d) is disposed between a line pressure port (102e) and an exhaust port (102c) of said pressure regulator valve (2).

2. A hydraulic control system as claimed in claim 1, characterized in that said pressure limiting valve (36) comprises:

a spool (236) disposed in a bore (136) to define the variable volume feedback chamber formed with the feedback port (136a), an outlet port (136c) which communicates with said torque converter (T/C), and a drain port (136d), said outlet port (136c) being in fluid communication with said feedback port (136a) via a flow restrictor (624).

**Revendications**

1. Dispositif de commande hydraulique pour une transmission, comprenant un convertisseur de couple (T/C), comprenant :

une pompe (O/P) pour fournir un fluide sous pression;

une soupape de régulation de la pression (2) apte à réguler le niveau de sortie de la pompe en drainant une partie du fluide déchargé par cette pompe et à développer une pression en ligne à l'intérieur de la conduite de pression en ligne (402), cette soupape de régulation de la pression (2) possédant une première lumière (102d) ainsi qu'une seconde lumière (102f); et

une soupape de limitation de la pression (36) qui est disposée de façon fonctionnelle entre la soupape de régulation de la pression (2) et le convertisseur de couple (T/C);

dans lequel la pompe est une pompe à capacité variable (O/P) avec un arrangement de commande qui comprend une chambre de commande (C/C);

dans lequel la soupape de limitation de la pression (36) possède une lumière d'admission (136b); et

dans lequel la soupape de régulation de la pression (2) possède une bobine (202) formée dans un espace (202d) qui couvre la seconde lumière (102f) de sorte que la seconde lumière (102f) ne peut pas permettre une communication de fluide avec le conduit de pression en ligne (402), cet espace (202d) découvrant la seconde lumière (102f) pour laisser la seconde lumière (102f) communiquer avec le conduit de pression (402), afin de drainer vers l'extérieur une partie du fluide déchargée par la pompe à capacité variable (O/P) hors de la seconde lumière (102f) à l'encontre de la lumière d'admission (136b) de la soupape de limitation de la pression (36), caractérisée en ce que

la soupape de limitation de la pression (36) possède une chambre de retour (136a);

la chambre de commande (C/C) étant en communication de fluide avec la première lumière (102d) de la soupape de régulation de la pression (2);

la lumière d'entrée (136b) étant en communication de fluide avec la seconde lumière (102f) de la soupape de régulation de la pression (2);

la première lumière (102d) étant disposée entre une ligne de pression (102e) et une lumière d'échappement (102c) de la soupape de régulation de la pression (2).

2. Système de commande hydraulique selon la revendication 1, caractérisé en ce que la soupape de limitation de la pression (36) est constituée par :

une bobine (236) disposée à l'intérieur d'un orifice (136) afin de définir une chambre de retour à volume variable formée avec une lumière de retour (136a), une lumière de sortie (136c) qui communique avec ledit convertisseur de couple (T/C), et une lumière de régulation (136d), la lumière de sortie (136c) étant en communication de fluide avec la lumière de retour (136a) via un restricteur d'écoulement (624).

**Patentansprüche**

1. Hydraulisches Steuersystem für ein Getriebe, enthaltend einen Drehmomentwandler (T/C), mit:

   einer Pumpe (O/P) zur Zuführung von Fluiddruck;

   einem Druckregulierventil (2) zum Regulieren der Fördermenge der Pumpe durch Ablassen eines Teiles des Fluides, das durch die Pumpe abgegeben wird und zum Aufbau eines Leitungsdruckes in einer Leitungsdruckleitung (402), wobei das Druckregulierventil (2) einen ersten Anschluß (102d) und einen zweiten Anschluß (102f) aufweist; und

   einem Druckbegrenzungsventil (36), das betrieblich zwischen dem Druckregulierventil (2) und dem Drehmomentwandler (T/C) angeordnet ist;

   wobei die Pumpe eine Pumpe (O/P) mit veränderlicher Förderleistung ist und eine Steueranordnung einschließlich einer Steuerkammer (C/T) besitzt;

   wobei das Druckbegrenzungsventil (36) einen Einlaßanschluß (136b) aufweist; und

   wobei das Druckregulierventil (2) einen Ventilschieber (202) aufweist, der mit einem Steg (202d) versehen ist, welcher den zweiten Anschluß (102f) abdeckt, so daß der zweite Anschluß (102f) nicht in Fluidverbindung mit der Leitungsdruckleitung (402) ist, wobei der Steg (202d) den zweiten Anschluß (102f) freigibt, um den zweiten Anschluß (102f) mit der Leitungsdruckleitung (402) kommunizieren zu lassen, um so einen Teil des Fluides, der durch die Pumpe (O/P) mit veränderlicher Förderleistung abgegeben wird, aus dem zweiten Anschluß (102f) heraus in Richtung zu dem Einlaßanschluß (136b) des Druckbegrenzungsventiles (36) zu entlasten,

   **dadurch gekennzeichnet,**

   daß das Druckbegrenzungsventil (36) eine Rückkopplungskammer (136a) aufweist;

   daß die Steuerkammer (C/C) mit dem ersten Anschluß (102d) des Druckregulierventiles (2) fluidverbunden ist;

   daß der Einlaßanschluß (136b) mit dem zweiten Anschluß (102f) des Druckregulierventiles (2) fluidverbunden ist;

   daß der erste Anschluß (102d) zwischen einem Leitungsdruckanschluß (102e) und einem Austrittsanschluß (102c) des Druckregulierventiles (2) angeordnet ist.

2. Hydraulisches Steuersystem nach Anspruch 1, **dadurch gekennzeichnet,** daß das Druckbegrenzungsventil (36) aufweist:

   einen Ventilschieber (236), der in einer Bohrung (136) angeordnet ist, um eine Rückkopplungskammer mit veränderlichem Volumen zu begrenzen, die mit einem Rückkopplungsanschluß (136a), einem Auslaßanschluß (136c), der mit dem Drehmomentwandler (T/C) kommuniziert, und einem Ablaßanschluß (136d) versehen ist, wobei der Auslaßanschluß (136c) über eine Strömungsdrosselstelle (624) in Fluidverbindung mit dem Rückkopplungsanschluß (136a) ist.

# FIG.1

EP 0 253 952 B1

FIG.2(a)

EP 0 253 952 B1

FIG.2(b)

# FIG.2(c)

EP 0 253 952 B1

# FIG.3